# EUROPÄISCHE PATENTANMELDUNG

(11) **EP 4 715 123 A1**
(43) Veröffentlichungstag der Anmeldung: **25.03.2026**
(21) Anmeldenummer: 25199686.4
(22) Anmeldetag: 02.09.2025
(51) Int. Cl.: E02F 5/08

(54) **VERFAHREN ZUM MASCHINELLEN VERLEGEN VON LEITUNGEN IM BODEN UND VERLEGEMASCHINE ZUR DURCHFÜHRUNG DES VERFAHRENS**

(30) Priorität: 19.09.2024 DE 102024127069
(71) Anmelder: Ruhland, König & Co. Elektro GmbH, 84098 Hohenthann (DE)
(72) Erfinder: ZIERER, Johann, 84098 Hohenthann (DE); KÖNIG, Paul, 84098 Hohenthann (DE); KÖNIG, Martin, 84098 Hohenthann (DE)
(74) Vertreter: Benninger, Johannes

(57) **Zusammenfassung**

Es ist ein Verfahren zum Verlegen von Kabeln und/oder Leitungen (34) im Erdreich (30) offenbart. Bei dem Verfahren wird mittels eines an einem fahrenden Trägerfahrzeug (18) höhenverstellbar aufgehängten rotierenden Fräsrades (16) eine Bodenoberfläche (12) aufgebrochen und eine Furche definierter und variabler Tiefe gezogen. Mittels eines dem Fräsrad (16) nachgeordneten und in einer durch die Furche definierten Spur gezogenen Verlegepflugs (32) wird mindestens ein Kabel und/oder mindestens eine Leitung (34) in das aufgebrochene Erdreich (30) eingebracht.

Der Verlegepflug (32) ist in seinem Arbeits- und Ablageniveau (42) in Bezug zu einer durch das rotierende Fräsrad (16) definierten Furchentiefe variabel einstellbar. Das Arbeits- und Ablageniveau (42) des Verlegepfluges (32) liegt insbesondere unterhalb der durch das Fräsrad (16) geschaffenen Furchentiefe (40).

Das Fräsrad (16) kann für eine Kurvenfahrt mitsamt dem dahinter laufenden Verlegepflug (32) um eine vertikale Achse (44) verschwenkt werden. Zudem kann auch der Verlegepflug (32) um eine vertikale Achse (46) gegenüber der Aufhängung des Fräsrades (16) verschwenkt werden.

Es ist zudem eine Verlegemaschine (10) offenbart, die zur Durchführung des Verfahrens vorgesehen ist.

## Beschreibung

Die vorliegende Erfindung betrifft ein Verfahren zum maschinellen Verlegen von Leitungen, Kabeln o. dgl. langgestreckten Verbindungsrohren im Boden. Die Erfindung betrifft zudem eine Verlegemaschine, die zur Durchführung des Verfahrens geeignet und hierfür entsprechend ausgestattet ist.

Um Leitungen, Kabeln oder Rohren unterhalb des Bodenniveaus in das Erdreich einzubringen, ist es grundsätzlich möglich, einen Graben in einer Tiefe auszuheben, die dem Ablageniveau der versenkt zu verlegenden Leitung entsprechen soll, dort die Leitung oder das Rohr abzulegen, den Graben anschließend wieder zuzuschütten und vorzugsweise das in den Graben zurückgeführte Erdreich ausreichend zu verdichten, um solchermaßen den Boden wieder einzuebnen. Ein solcher Graben kann grundsätzlich manuell ausgehoben werden, wird aber normalerweise mit maschineller Unterstützung, d.h. mittels hydraulisch betätigter Baggerschaufel eines entsprechend ausgestatteten selbstfahrenden Baggerfahrzeugs aufgegraben. Das Zuschütten des Grabens nach dem Einsenken der Leitung kann wahlweise ebenfalls mit Hilfe derselben Maschine erfolgen, kann aber auch mittels Räumschildes einer entsprechend ausgestatteten Erdbewegungsmaschine erfolgen.

Insbesondere bei sehr langen Strecken, über welche solche Erdleitungen in vielen Fällen im Boden zu verlegen sind, erweist sich diese Art der Erdbewegung beim Ausheben und Wiederverschließen von Gräben als sehr zeitaufwendig und arbeitsintensiv, so dass sich verbesserte und verfahrensbeschleunigende Verfahren zum Verlegen von Kabeln und Leitungen im Erdreich etabliert haben. Insbesondere haben sich in der Praxis sog. Verlegepflüge durchgesetzt, bei denen mittels Pflugvorrichtungen der Boden aufgeschlitzt und gelockert wird. Durch an der Pflugvorrichtung angeordnete Kabeldurchführungen können Kabel oder Leitungen extern zugeführt werden oder durch am Pflug positionierte Vorratstrommeln Kabel oder Leitungen auf der Pflugsohle beziehungsweise im durch den Pflug gelockerten Boden abgelegt werden.

Diese Verfahren bieten nicht nur den Vorteil des kontinuierlichen und vergleichsweise zügigen Fortschrittes beim Schaffen eines Grabens und dem Verlegen des Kabels oder der Leitung, sondern können darüber hinaus dazu beitragen, den Graben weitaus schmaler auszuführen, als dies beim Freilegen eines Grabens mittels Baggerschaufel der Fall ist, denn dort droht das Erdreich an den Flanken des Grabens ständig abzubröckeln, nachzurutschen und den Graben wieder zuzuschütten, während sich die Verlegepflüge kaum oder in deutlich reduziertem Ausmaß mit diesem Problem auseinanderzusetzen haben.

Das beschriebene Prinzip lässt sich an einem Verlegepflug sowie an einem Verfahren zum Einpflügen von Kabeln erkennen, wie es sich bspw. in der DE 38 28 595 A1 beschrieben findet. Der dort beschriebene Verlegepflug ist in höhenverstellbarer Anordnung heckseitig an ein Fahrzeug gekoppelt, das zudem frontseitig einen Trommelvorrat mit dem zu verlegenden Kabel trägt. Bei der Fortbewegung des Trägerfahrzeuges wird der Verlegepflug in einer definierten Bodentiefe durch das Erdreich gezogen und gleichzeitig das Kabel einem dem Pflug unmittelbar folgenden Kabelschacht zugeführt, so dass es sich in der gepflügten Bodentiefe ablegen lässt.

Allerdings versagen solche Verlegepflüge bei asphaltierten, betonierten, steinigen oder anderweitig luft- und/oder wasserdicht versiegelten Bodenschichten in aller Regel, weil dort der Pflug die harten Deckschichten entweder nicht durchdringen kann oder diese stellenweise unkontrolliert aufbricht und größere Abschnitte herausreißt. Somit ist für diese Bodenverhältnisse in aller Regel ein vorheriges Auffräsen unverzichtbar. Eine Fräsvorrichtung zum Auffräsen verdichteter Deckschichten lässt sich zudem mit einem nachfolgenden Kabelverlegungspflug kombinieren, wie dies durch zahlreiche Dokumente zum bereits bekannten Stand der Technik belegt ist.

Das Grundprinzip eines solchen kombinierten Maschine zum Verlegen von Kabeln oder Leitungen im Boden geht bspw. aus der US 4 812 078 A, aus der FR 2 722 809 A1 hervor. Der Aufbau mit dem Trägerfahrzeug, dem frontseitig dort angeordneten Trommelvorrat mit der aufgewickelten Leitung sowie dem heckseitig gezogenen Verlegepflug ähnelt dem oben erwähnten älteren Maschinenprinzip, wie es aus der DE 38 28 595 A1 hervorgeht. Allerdings ist dem Verlegepflug ein rotierend angetriebenes Fräsrad vorgeordnet, mit dem eine Furche im Boden in der vorgesehenen Bodentiefe ausgefräst wird, in welche dann wiederum mittels des unmittelbar folgenden Verlegepflugs die Leitung abgelegt werden kann.

Weitere derartige Maschinen mit rotierenden Fräsrädern und nachgeordneten Verlegepflügen finden sich in der EP 3 670 759 A1, in der EP 1 167 625 A1 oder in der WO 2018/ 045 404 A1 beschrieben.

Ein gemeinsames Merkmal der bekannten Maschinen zum Verlegen von Leitungen ist allerdings deren Baugröße, die bereits durch die schweren Trägerfahrzeuge mit ihren Gleiskettenfahrwerken bedingt ist. Hinzu kommen die ausladenden vorderen und hinteren Anbauten für die jeweils frontseitig auskragenden Kabeltrommeln sowie die heckseitig angeordneten und die Gesamtlänge erheblich vergrößernden Einrichtungen zum Auffräsen des Bodens und zum Einbringen der von der frontseitigen Kabeltrommel abgezogenen Leitungen in den Boden. Bei der Betrachtung der bekannten Maschinen wird unmittelbar einsichtig, dass sich deren Einsatz im bebauten Gelände nahezu verbietet, sondern dass nahezu ausschließlich eine Verwendung im freien Gelände möglich erscheint.

Sollen hingegen Leitungen maschinell und mit möglichst geringen Beeinträchtigungen oder Beschädigungen einer vorhandenen Bebauung, insbesondere im kommunalen oder städtischen Bereich verlegt werden, so ist der Anwender fast zwangsläufig wieder auf die althergebrachten Verfahren verwiesen, bei denen er mittels Minibagger o. dgl. kompakter Grabmaschine die Gräben auszuheben hat, um anschließend auf manuellem Wege oder mit manueller Unterstützung die Leitungen in diese ausgehobenen Gräben einzubringen.

Angesichts der spezifischen Anforderungen, die bei vergleichsweise leichten Bodenverhältnissen mit geringem Anteil von harten und steinigen Böden sowie insbesondere bei einem gewünschten Maschineneinsatz in bebauter, in kommunaler und/oder städtischer Umgebung gelten, kann es als vorrangiges Ziel der vorliegenden Erfindung betrachtet werden, ein verbessertes Verfahren zur Kabelverlegung unter solchen Umgebungsbedingungen anzubieten, das mit möglichst weitestgehender maschineller Unterstützung und unter größtmöglicher Schonung der vorhandenen Wege- und Befestigungsinfrastruktur durchführbar ist. Zudem besteht ein damit in Verbindung stehendes Ziel der vorliegenden Erfindung darin, eine hierfür geeignete Maschine anzubieten, mit der das verbesserte Verfahren durchgeführt werden kann.

Diese Ziele der Erfindung werden mit den Gegenständen der unabhängigen Ansprüche erreicht. Merkmale vorteilhafter Weiterbildungen der Erfindung finden sich in den jeweiligen abhängigen Ansprüchen.

So schlägt die Erfindung zur Erreichung zumindest von Teilen der genannten Ziele ein Verfahren zum Verlegen von Kabeln und/oder Leitungen im Erdreich mit den Merkmalen des unabhängigen Verfahrensanspruchs vor, mit dem die Kabel und/oder Leitungen insbesondere unterhalb einer Bodenoberfläche verlegt werden können, die mittels eines rotierenden und in einer Verlege- und Vorschubrichtung bewegten Fräsrades furchenförmig geöffnet wird.

Bei dem erfindungsgemäßen Verfahren wird zunächst mittels eines an einem fahrenden Trägerfahrzeug höhenverstellbar aufgehängten rotierenden Fräsrades eine Bodenoberfläche aufgebrochen und eine Furche definierter und variabler Tiefe gezogen. Mittels eines dem Fräsrad nachgeordneten und in einer durch die Furche definierten Spur gezogenen Verlegepflugs wird dann mindestens ein Kabel und/oder mindestens eine Leitung in das aufgebrochene Erdreich eingebracht.

Das Verfahren zeichnet sich dadurch aus, dass der Verlegepflug in seinem Arbeits- und Ablageniveau in Bezug zu einer durch das rotierende Fräsrad definierten Furchentiefe variabel einstellbar ist. Dabei liegt das Arbeits- und Ablageniveau des Verlegepfluges insbesondere unterhalb der durch das Fräsrad geschaffenen Furchentiefe.

Bei dem Verfahren kann vorzugsweise vorgesehen sein, dass das Arbeits- und Ablageniveau des Verlegepfluges auf eine Tiefe eingestellt wird, die unterhalb des Fräsniveaus des Fräsrades befindet und damit unterhalb des Furchengrundes.

Weiterhin ist bei dem Verfahren vorsehen, dass das Fräsrad für eine Kurvenfahrt mitsamt dem dahinter laufenden Verlegepflug um eine vertikale Achse verschwenkt werden kann. Diese vertikale Schwenkachse befindet sich vorzugsweise heckseitig am Trägerfahrzeug. Außerdem ist bei dem Verfahrens vorsehen, dass für eine verbesserte oder erleichterte Kurvenfahrt auch der Verlegepflug um eine vertikale Achse gegenüber der Aufhängung des Fräsrades verschwenkt werden kann. Diese beiden genannten vertikalen Achsen sind parallel zueinander, nicht aber deckungsgleich, denn die näher am Trägerfahrzeug befindliche Schwenkachse betrifft zunächst die Aufhängung für das Fräsrad, das zudem in seiner Höhe verstellbar ist. An einem geeigneten Rahmen, der vorzugsweise für die Aufhängung des nachfolgenden Verlegepfluges verlängert ist, befindet sich eine weitere gelenkige Aufhängung, so dass auch der Verlegepflug um eine weitere vertikale Achse verschwenkt werden kann, so dass eine Mehrgelenk-Anordnung mit zwei voneinander beabstandeten gelenkigen Verbindungen für das Fräsrad am Trägerfahrzeug sowie für den Verlegepflug an einer Aufhängung oder einem Rahmen des Fräsrades gebildet ist, die eine optimierte Leitungs- oder Kabelverlegung bei Kurvenfahrt, insbesondere auch bei engeren Radien, ermöglicht.

Mittels des Fräsrades kann eine versiegelte Deckschicht an der Bodenoberfläche aufgebrochen werden, die alleine mit einem Verlegepflug kaum problemlos zu öffnen wäre. Somit dient das Fräsrad in erster Linie zum Aufbrechen der versiegelten Deckschicht, d.h. einer asphaltierten oder betonierten Deckschicht.

Dadurch ist es möglich, den Verlegepflug durch ein Bodenniveau zu ziehen, das sich unterhalb der versiegelten Deckschicht befindet. Dabei arbeitet der Verlegepflug normalerweise im weichen Erdreich, so dass sein Arbeitsniveau unterhalb des Fräsrades liegen kann.

Der Verlegepflug kann insbesondere mittels einer heckseitig am Trägerfahrzeug befindlichen und in der Höhe verstellbaren Aufhängung angelenkt sein. Dabei kann der Verlegepflug bspw. über eine höhenverstellbare Linearführung, insbesondere über eine hydraulisch verstellbare Linearführung an einer Trägerkonstruktion des Fräsrades aufgehängt sein.

Nach dem Ablegen und Einpflügen der mindestens einen Leitung oder ggf. auch eines Leitungsbündels im aufgebrochenen Boden, die in nahezu beliebiger Kurvenfahrt erfolgen kann, kann eine nachfolgende Bodenbearbeitung durchgeführt werden, die aber nicht mehr unmittelbarer Bestandteil des erfindungsgemäßen Verfahrens ist.

Das aufgebrochene Erdreich bzw. das Bodenareal kann anschließend verdichtet werden, bspw. mit einem Plattenverdichter, der mit Vibrationen arbeitet.

Zur Erreichung der oben genannten Ziele schlägt die vorliegende Erfindung neben dem oben in unterschiedlichen Ausführungsvarianten beschriebenen Verfahren außerdem eine Verlegemaschine zum Verlegen von Kabeln oder Leitungen im Boden vor, wobei sich das Verfahren insbesondere mit einer fahrbaren und ortsverändlichen Verlegemaschine zum Verlegen von Kabeln und/oder Leitungen im Erdreich durchführen lässt, wie sie mit dem unabhängigen Anspruch beschrieben wird. Die Maschine ermöglicht es, die die Kabel oder Leitungen unterhalb einer mittels rotierenden und in einer Verlege- und Vorschubrichtung bewegten Fräsrades furchenförmig geöffneten Bodenoberfläche zu verlegen.

Die erfindungsgemäße fahrbare und ortsverändliche Verlegemaschine umfasst zumindest ein angetriebenes Trägerfahrzeug mit daran heckseitig höhenverstellbar aufgehängtem rotierenden Fräsrad, zum Aufbrechen einer Bodenoberfläche und zum Ziehen einer Furche definierter und variabler Tiefe. Weiterhin umfasst die Verlegemaschine einen dem Fräsrad nachgeordneten und in einer durch die Furche definierten Spur gezogenen Verlegepflug, der dafür vorgesehen und entsprechend ausgestattet ist, um mindestens ein Kabel und/oder mindestens eine Leitung in das aufgebrochene Erdreich einzubringen, wobei der Verlegepflug in seinem Arbeits- und Ablageniveau in Bezug zu einer durch das rotierende Fräsrad definierten Furchentiefe variabel einstellbar ist, und wobei das Arbeits- und Ablageniveau des Verlegepfluges insbesondere unterhalb der durch das Fräsrad geschaffenen Furchentiefe liegt.

Bei der erfindungsgemäßen Verlegemaschine kann das rotierend angetriebene Fräsrad insbesondere heckseitig am Trägerfahrzeug in der Höhe verstellbar aufgehängt sein, bspw. über eine hydraulisch verstellbare Parallelogrammführung o. dgl.

Der Verlegepflug kann zudem mittels einer heckseitig am Trägerfahrzeug befindlichen und in der Höhe verstellbaren Aufhängung angelenkt sein. So kann der Verlegepflug bspw. über eine höhenverstellbare und insbesondere über hydraulische Verstellung höhenveränderliche Linearführung an einer Trägerkonstruktion des Fräsrades aufgehängt sein.

Das Trägerfahrzeug kann vorzugsweise durch ein kompaktes Raupenfahrzeug gebildet sein, insbesondere durch ein ferngesteuertes Raupenfahrzeug mit elektromotorischem oder sonstigem Antrieb. Als Antrieb kommt normalerweise insbesondere ein Verbrennungsmotor in Frage. Das Trägerfahrzeug kann zudem eine Kabeltrommel tragen, von der die dem Verlegepflug zugeführte Leitung bzw. das Kabel abgezogen werden kann.

Die erfindungsgemäße Ausgestaltung der Verlegemaschine sieht vor, dass das Fräsrad für eine Kurvenfahrt mitsamt dem dahinter laufenden Verlegepflug um eine vertikale Achse (heckseitig am Trägerfahrzeug befindlich) verschwenkbar angeordnet ist. Außerdem ist auch der Verlegepflug um eine vertikale Achse gegenüber der Aufhängung des Fräsrades verschwenkbar angeordnet, um solchermaßen die Kurvenfahrt zu erleichtern. Die genannten vertikalen Achsen decken sich nicht, sondern sind beabstandet voneinander angeordnet. Da eine solche Verlegemaschine zumindest hinsichtlich ihrer genannten Funktionselemente typischerweise seitensymmetrisch aufgebaut ist, befinden sich die beiden vertikalen Schwenkachsen innerhalb einer vertikalen Längsmittelebene der Verlegemaschine, wenn sich diese nicht in Kurvenfahrt befindet. Diese (gedachte) vertikale Längsmittelebene kann sich bei Kurvenfahrt der Maschine mit entsprechend verschwenkten Anbauteilen (Fräsrad und Verlegepflug) als verwölbte Ebene gedacht werden, in der weiterhin die beiden vertikalen Schwenkachsen liegen.

Sofern aus Sicht des angesprochenen Fachmannes sinnvoll miteinander kombinierbar, können einige der oder alle dieser zuvor genannten Variationen oder Ausführungsvarianten des erfindungsgemäßen Verfahrens und/oder der erfindungsgemäßen Verlegemaschine wahlweise auch miteinander kombiniert werden, um das/die oben formulierten Ziel(e) zumindest teilweise zu erreichen, und/oder um den gewünschten Effekt der Erfindung zu erzielen.

Es sei an dieser Stelle ausdrücklich erwähnt, dass alle Aspekte und Ausführungsvarianten, die im Zusammenhang mit der erfindungsgemäßen Verlegemaschine erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Verlegemaschine von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Verlegemaschine betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Verlegemaschine.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einer schematischen Seitenansicht eine Ausführungsvariante einer erfindungsgemäßen Verlegemaschine, die mit einer Bodenfräse und einem Verlegepflug zum Verlegen von Kabeln und/oder Leitungen im Boden ausgestattet ist.
Fig. 2 zeigt die Verlegemaschine gemäß Fig. 1, bei welcher die Bodenfräse sowie der Verlegepflug zur Verlegung der zugeführten Leitung unterhalb des Bodenniveaus abgesenkt sind, so dass die Verlegemaschine in einem Betriebszustand gezeigt ist.
Fig. 3 zeigt in schematischer Draufsicht die Verlegemaschine gemäß Figuren 1 und 2, die in Geradeausfahrt eine Leitung verlegt.
Fig. 4 zeigt in einer weiteren schematischen Draufsicht die Verlegemaschine gemäß Fig. 3, bei der für eine Kurvenfahrt sowohl die Bodenfräse als auch der Verlegepflug um eine Hochachse seitlich ausgeschwenkt sind.

Für gleiche oder gleich wirkende Elemente der Erfindung verwendet die nachfolgende Figurenbeschreibung in der Regel jeweils gleiche Bezugsziffern. Ferner werden der Übersicht halber in vielen Fällen nur solche Bezugsziffern in den einzelnen Figuren verwendet, die für die Beschreibung der jeweiligen Figur erforderlich sind. Die dargestellten Ausführungsformen stellen lediglich Beispiele dar, wie die erfindungsgemäße Pfostenrammvorrichtung oder das erfindungsgemäße Verfahren ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

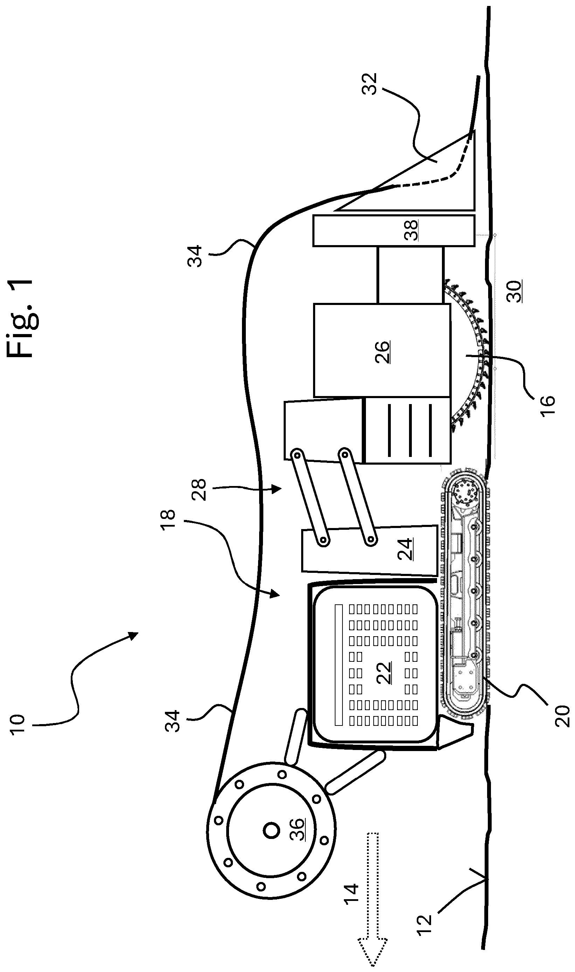

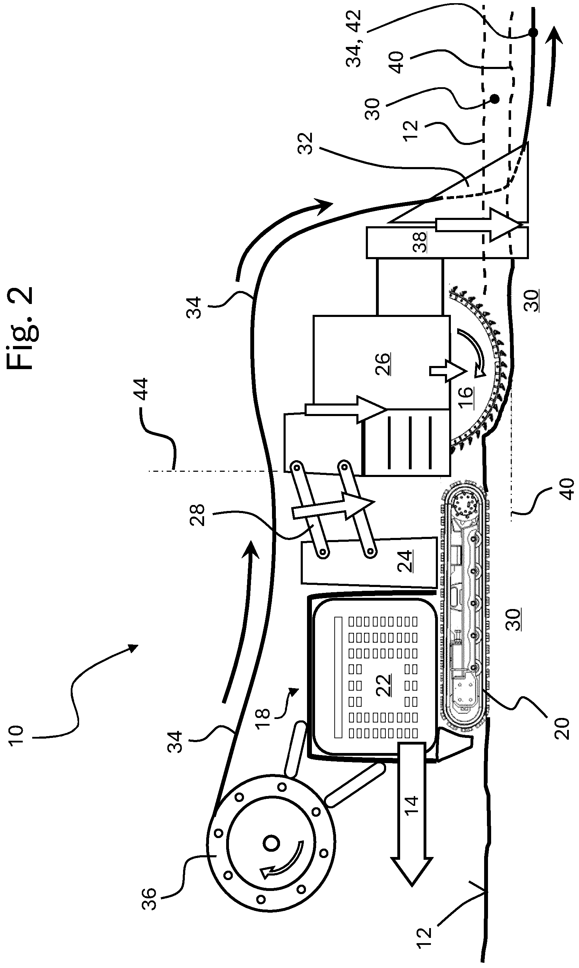

Die beiden schematischen Seitenansichten der Figuren 1 und 2 verdeutlichen die wichtigsten Komponenten einer erfindungsgemäßen fahrbaren und ortsverändlichen Verlegemaschine 10, mit der Kabel und/oder Leitungen in einem kontinuierlichen Prozess im Erdreich verlegt werden können, und zwar unterhalb einer Bodenoberfläche 12, auf der die Verlegemaschine 10 entlangfährt und die mittels eines rotierenden und in einer Verlege- und Vorschubrichtung 14 bewegten Fräsrades 16 furchenförmig geöffnet wurde.

Dabei soll zunächst anhand der Fig. 1 die Verlegemaschine 10 mitsamt ihren Komponenten erläutert werden, bevor anhand der Fig. 2 das erfindungsgemäße Verfahren zum Verlegen von Kabel und/oder Leitungen erläutert wird, das mit dieser Verlegemaschine 10 durchgeführt werden kann. Da sich die Verlegemaschine 10 in der Darstellung der Fig. 1 in Bereitschaft oder in Ruhe befindet, ist die Verlege- und Vorschubrichtung 14 mit einem unterbrochen linierten Pfeil angedeutet. Diese von rechts nach links weisende Bewegungsrichtung ist jedoch die bevorzugte Fahrtrichtung der Verlegemaschine 10.

Die in den Figuren 1 und 2 in schematischer Seitenansicht beispielhaft dargestellte Verlegemaschine 10 umfasst ein motorisch angetriebenes Trägerfahrzeug 18, das mit zwei Gurtbandlaufwerken 20 zur Fortbewegung sowie mit einem Antriebsaggregat 22 ausgestattet ist, wobei das Antriebsaggregat 22 insbesondere durch einen Verbrennungsmotor gebildet sein kann. Die Gurtbandlaufwerke 20 können bspw. durch Gummiraupenbänder, wahlweise auch durch metallene Gleisketten o. dgl. gebildet sein. Die über ein geeignetes Getriebe oder bspw. über einen hydrostatischen Fahrantrieb angetriebenen Gurtbandlaufwerke 20 ermöglichen eine bodenschonende Fortbewegung des Trägerfahrzeuges 18 und bieten gleichzeitig eine gute und schlupfarme Traktion.

Das kompakte Trägerfahrzeug 18 weist normalerweise keinen Fahrerplatz auf, da es sich dabei um ein funkferngesteuertes oder wahlweise über ein am Fahrzeug befindliches Steuerterminal steuerbares Trägerfahrzeug 18 handelt, das in seiner typischen Baugröße einem Minibagger oder einem Hubfahrzeug, wie es für Fassadenarbeiten eingesetzt werden kann, o. dgl. Kompaktfahrzeug ähneln kann. Derartige Trägerfahrzeuge 18 sind meist kaum länger als zwei Meter und weisen oftmals nur eine Spurweite von ca. einem Meter oder sogar weniger auf.

Wahlweise kann das Trägerfahrzeug 18 auch geringfügig größer ausfallen, wobei seine Baugröße in einem engen Zusammenhang mit seiner Masse steht, welche wiederum seine Einsatzfähigkeit als Trägerfahrzeuge 18 für eine Bodenfräse und für einen Kabelpflug mitbestimmt, denn einem zu leichtgewichtigen Trägerfahrzeug 18 können unter Umständen die ballastierenden Eigenschaften fehlen, die für eine effektive Fräsarbeit und für eine gleichmäßige Kabelverlegung in konstanter Bodentiefe erforderlich sind. Aus diesem Grund wird der Anwender eine sinnvolle Größe des Trägerfahrzeuges 18 sowie ein praktikables Gewicht des Antriebsaggregats 22 wählen, so dass die gewünschten Bodenbearbeitungsaufgaben auch zuverlässig zu erfüllen sind.

Jedenfalls sei an dieser Stelle ausdrücklich klargestellt, dass es sich bei dem Trägerfahrzeug 18 und ein vergleichsweise sehr kompaktes Fahrzeug handelt, das keinesfalls die Baugröße der weiter oben beschriebenen und aus dem Stand der Technik bekannten Kabelverlegeaggregaten aufweisen soll, denn ansonsten wäre der mit der Erfindung angestrebte Einsatz in eng bebauter Umgebung, innerhalb von Siedlungen, in städtischer und kommunaler Umgebung etc. kaum möglich.

Da mit der Fahrtrichtung 14 des Trägerfahrzeuges 18, die der Verlege- und Vorschubrichtung 14 der Verlegemaschine 10 entspricht, die Orientierung des Trägerfahrzeuges 18 festgelegt ist, kann damit auch klargestellt werden, dass heckseitig am Aufbau 24 des Trägerfahrzeuges 18 eine Bodenfräse 26 in höhenverstellbarer Weise angeordnet ist. Die Bodenfräse 26 kann bspw. über eine hydraulisch in der Höhe verstellbare Parallelogrammaufhängung 28 heckseitig am Aufbau 24 verankert sein, so dass eine Höhenjustierung der Bodenfräse 26 gegenüber der Aufbauhöhe des Trägerfahrzeuges 18 und gleichzeitiger Beibehaltung der horizontalen Ausrichtung der Bodenfräse 26 ermöglicht ist. Die Bodenfräse 26 weist eine Lagerung sowie einen motorischen Antrieb für das um eine horizontale Achse rotierende Fräsrad 16 auf, dessen horizontale Rotationsachse normalerweise exakt quer zur horizontalen Längsachse des Trägerfahrzeuges 18 ausgerichtet ist, so dass das rotierend angetriebene Fräsrad 16 in die Lage versetzt ist, bei sich in Vorschubrichtung 14 bewegender Verlegemaschine 10 eine Furche in den Boden 30 zu fräsen, die exakt der Spur des Trägerfahrzeuges 18 folgt.

Bei dem Fräsrad 16 kann es sich um eine flache Scheibe größeren Durchmessers handeln, bspw. mit einem Außendurchmesser von etwas mehr als einem Meter, wobei der äußere Rand des Fräsrades 16 mit einer Vielzahl von Fräsmeißeln ausgestattet sein kann, wie dies durch die Figuren 1 und 2 in schematischer Weise angedeutet ist. Diese Fräsmeißel können bspw. mir verschleißfesten Hartmetallspitzen ausgestattet und auswechselbar am Außenumfang des Fräsrades 16 angeordnet sein. Die Hartmetallspitzen des solchermaßen ausgestatteten Fräsrades 16 sorgen für dessen Eignung zur Bearbeitung harter und versiegelter Böden 30, bei denen die Bodenoberfläche 12 und auch die unmittelbar darunter liegenden Bodenschichten asphaltiert oder betoniert und damit für Verlegepflüge ohne solche Bodenfräsen 26 nur schwer zu durchdringen sind.

Jedenfalls sollte die Bodenfräse 26 in der Lage sein, mittels des rotierend angetriebenen Fräsrades 16 mit seinen Hartmetallmeißeln nahezu beliebige versiegelte oder unversiegelte Bodenoberflächen 12 aufzubrechen und dort sowie in den unmittelbar darunter liegenden Bodenschichten 30 eine Furche definierter Breite und - je nach Höheneinstellung der Bodenfräse 26 - auch definierter und variabler Tiefe zu ziehen.

Der Antrieb des Fräsrades 16 kann bspw. ein an der höhenverstellbaren Bodenfräse 26 befindlicher Hydromotor sein. Wahlweise lässt sich das Fräsrad 16 jedoch auch über eine mechanische Getriebeübersetzung, über Riemenantriebe o. dgl. direkt vom Antriebsaggregat 22 antreiben.

Rückseitig am Trägerrahmen der Bodenfräse 26 befindet sich ein dem Fräsrad 16 nachgeordneter Verlegepflug 32, der in einer Spur gezogen wird, die durch die mittels des Fräsrades 16 geschaffenen Furche definiert wurde. Dieser gezogene Verlegepflug 32 dient dem Einarbeiten mindestens eines Kabels und/oder mindestens einer Leitung 34 in das durch die Bodenfräse 26 aufgebrochene Erdreich 30.

Die dem Verlegepflug 32 kontinuierlich zugeführte Leitung 34, die in den Boden 30 eingearbeitet und dort in konstanter Ablagetiefe verlegt werden soll, kann insbesondere von einer Vorratstrommel 36 abgerollt werden, die sich frontseitig am Trägerfahrzeug 18 befindet, wobei die von der Vorratstrommel 36 zur Verfügung gestellte Leitung 34 über das Trägerfahrzeug 18 nach hinten zum Verlegepflug 32 zu führen ist, wie dies in den Figuren 1 und 2 schematisch angedeutet ist. Auf die zeichnerische Darstellung von geeigneten Leitungsführungen zur Distanzierung der Leitung 34 vom Trägerfahrzeug 18 wurde dabei allerdings verzichtet.

Wie anhand der Fig. 1 sowie der zeichnerischen Darstellung einer typischen Einsatzsituation einer solchen Verlegemaschine 10 in Fig. 2 verdeutlicht wird, kann der rückseitig am Trägerrahmen der gegenüber dem Trägerfahrzeug 18 höhenverstellbaren Bodenfräse 26 angeordnete Verlegepflug 32 ebenfalls in der Höhe verstellt werden, und zwar in Bezug auf das Höhenniveau der Bodenfräse 26, was bspw. durch eine vertikal verstellbare Linearführung 38 gegeben sein kann. Bei einer solchen Linearführung 38 kann ein hydraulischer Verstellzylinder (hier nicht gezeigt) für eine Hebe- und Senkbewegung des Verlegepflugs 32 entlang einer Schlittenführung (hier ebenfalls nicht gezeigt) sorgen, so dass der Verlegepflug 32 gegenüber der Bodenfräse 26 abgesenkt oder angehoben werden kann.

Die verschiedenen Pfeildarstellungen der Fig. 2 verdeutlichen die Bewegungsrichtungen der Verlegemaschine 10, nämlich deren Verlege- und Vorschubrichtung 14 (von rechts nach links) sowie der von der Vorratstrommel 36 abgezogenen Leitung 34 (Zugrichtung von links oben nach rechts unten), wobei sich die Vorratstrommel 36 normalerweise in Pfeilrichtung (im Uhrzeigersinn) dreht. Außerdem zeigen die senkrecht nach unten gerichteten Pfeile an der Bodenfräse 26 und am Fräsrad 16 deren vertikale Verstellmöglichkeiten, insbesondere zum Absenken des Fräsrades 16 auf eine bevorzugte Arbeitstiefe 40, die naturgemäß unterhalb des Höhenniveaus der Bodenoberfläche 12 liegt, wie dies in Fig. 2 schematisch gezeigt ist.

Diese Absenkbewegung der Bodenfräse 26 kann in erster Linie mittels der insbesondere hydraulisch betätigbaren Parallelogrammaufhängung 28 erfolgen, welche die Bodenfräse 26 heckseitig und in höhenverstellbarer Weise mit dem Aufbau 24 des Trägerfahrzeuges 18 der Verlegemaschine 10 verbindet.

Zusätzlich kann darüber hinaus vorgesehen sein, dass das Fräsrad 16 in vertikaler Richtung gegenüber dem Trägerrahmen der Bodenfräse 26 abgesenkt oder angehoben werden kann, bspw. mit einer Linearführung der Lagerung des Fräsrades 16, ggf. mitsamt dessen Antriebsmotors (hier nicht gezeigt). Die schematische Darstellung der Fig. 2 impliziert durch das weiter unten aus dem Trägerrahmen der Bodenfräse 26 herausragende Fräsrad 16 eine solche Absenkung nach unten, so dass es sich beim Absenken des Fräsrades 16 auf die vorgesehene Arbeitstiefe 40 um eine überlagerte Absenkung an der Parallelogrammaufhängung 28 sowie an der Lagerung des Fräsrades 16 selbst handelt.

Und schließlich kann der heckseitig am Trägerrahmen der Bodenfräse 26 angeordnete Verlegepflug 32 abgesenkt oder angehoben werden, und zwar mittels der Linearführung 38, die eine Rückseite des Trägerrahmens der Bodenfräse 26 mit dem Verlegepflug 32 verbindet, so dass dieser in vertikaler Richtung angehoben oder abgesenkt werden kann, vorzugsweise unter Einsatz einer hydraulischen Verstelleinrichtung, wahlweise auch unter Einsatz eines Zahnstangenantriebes oder mittels Einsatzes eines auf andere Weise ausgestalteten Linearantriebes (hier nicht näher dargestellt).

Bei dem sich mittels seiner angetriebenen Gurtbandlaufwerke 20 auf der Bodenoberfläche 12 in Vorschubrichtung 14 bewegenden Trägerfahrzeug 18 und bei in Pfeilrichtung (im Uhrzeigersinn, vgl. Fig. 2) rotierendem Fräsrad 16, das zumindest so weit abgesenkt ist, dass die versiegelte, asphaltierte oder betonierte oberste Bodenschicht unterhalb der Bodenoberfläche 12 durchdrungen wird, kann eine sinnvolle Arbeitstiefe 40 des Fräsrades 16 gemäß Fig. 2 von bspw. ca. fünfzehn bis fünfundzwanzig Zentimeter angenommen werden. Diese Arbeitstiefe 40 des Fräsrades 16 ist gemäß Fig. 2 deutlich unterhalb der Bodenoberfläche 12 eingestellt, auf welcher die Gurtbandlaufwerke 20 des Trägerfahrzeuges 18 aufliegen und sich zum Fahren der Verlegemaschine 10 in Vorschubrichtung 14 fortbewegen.

Die Besonderheit des erfindungsgemäßen Verfahrens zum Verlegen der Leitungen 34 im Boden 30 besteht nun darin, dass der hinter der Bodenfräse 26 den Boden 30 durchschneidende Verlegepflug 32 in seinem Arbeits- und Ablageniveau 42 in Bezug zu der durch das rotierende Fräsrad 16 definierten Furchentiefe, die hier als Arbeitstiefe 40 der Bodenfräse 26 definiert wurde, nicht nur variabel einstellbar ist, sondern dass das Arbeits- und Ablageniveau 42 des Verlegepfluges 32 deutlich unterhalb der durch das Fräsrad 16 geschaffenen Furchentiefe bzw. Arbeitstiefe 40 liegt.

Die Ablagetiefe 42, die der Verlegepflug 32 durch seine gegenüber dem Fräsrad 16 tiefere Arbeitseinstellung für die im Boden 30 zu verlegende Leitung 34 ermöglicht, liegt vorzugsweise um mindestens zehn Zentimeter unterhalb der Arbeitstiefe 40 der Bodenfräse 26, d.h. der durch das rotierende Fräsrad 16 erzeugten Furchentiefe, kann jedoch auch noch tiefer liegen, bspw. um ca. zwanzig, fünfundzwanzig oder bis zu dreißig Zentimetern unterhalb der Arbeitstiefe 40 bzw. unterhalb des Furchengrundes.

Diese eingestellte Ablagetiefe oder dieses eingestellte Ablageniveau 42 für die Leitungen 34 kann dadurch realisiert werden, dass es sich bei dem Boden 30 unterhalb der durch eine Asphalt- oder Betonschicht versiegelten oberen Bodenschicht unmittelbar unterhalb der Bodenoberfläche 12 in aller Regel um weichen und nachgiebigen Boden 30 handelt, der ohne größere Widerstände mit dem Verlegepflug 32 durchschnitten und durchdringen werden kann. Der Bodenwiderstand für den Verlegepflug 32 ist bereits deshalb relativ gering, da die von der Bodenfräse 26 hergestellte Furche nahezu keinen Widerstand bietet und die darunter liegenden weicheren Bodenschichten in einer Tiefe von einigen Zentimetern unterhalb der gefrästen Furche kaum zusätzlichen Widerstand bereithalten.

Durch seine oben beschriebene Arbeitsweise ist das erfindungsgemäße Verlegeverfahren unter Einsatz der beschriebenen Verlegemaschine 10 besonders gut für eine Verwendung in bebauter Umgebung geeignet, d.h. in dörflicher oder städtischer Umgebung, wo es nicht nur wichtig ist, eine kompakte Arbeitsmaschine zur Verfügung zu haben, denn die herkömmlichen Verlegemaschinen könnten in einer solchen Umgebung kaum effektiv eingesetzt werden, weil der Platz dafür fehlt.

Hinzu kommt die sehr schmale Furche, die mittels der Bodenfräse 26 gefräst werden kann. Diese Furche weist eine Breite von kaum mehr als zehn bis fünfzehn Zentimetern auf, was zum Öffnen der harten und widerständigen oberen Bodenschichten bereits genügt, um den Verlegepflug 32 hinter dem schmalen Fräsrad 16 durch die solchermaßen geöffnete Furche und in einem Ablageniveau 42 unterhalb der Arbeitstiefe 40 des Fräsrades 16 hindurchziehen zu können. Die Leitungen 34 können auf die beschriebene Weise sehr schnell und "minimalinvasiv" verlegt werden, ohne dass ein zeitaufwändiges Aufgraben der Leitungstrassen erforderlich wäre.

Ein optionaler Räumschild, der hinter dem Verlegepflug 32 auf dem Niveau der Bodenoberfläche 12 angeordnet sein kann, kann dazu dienen, das ausgefräste Erdreich unmittelbar nach dem Verlegen der Leitungen 34 im vorgesehenen Ablageniveau 42 wieder in die geöffnete Furche hineinzuschieben. Dieser Räumschild ist in den Figuren 1 und 2 nicht dargestellt, ebenso wenig wie eine optionale Verdichtereinrichtung, die der Verfestigung des Erdreichs in der zugeschütteten Furche dienen kann. Eine solche Verdichtereinrichtung kann aber vorzugsweise als separate Maschine ausgeführt sein, die in einem separaten Arbeitsgang über die zugeschüttete Furche fahren kann.

Im Idealfall können Anlieger die solchermaßen geöffneten Straßen bereits nach kurzer Zeit wieder befahren, da auch das anschließende Verschließen und Wiederversiegeln der Leitungstrassen aufgrund ihrer sehr schmalen Führung und der schnellen Überfahrt mit der beschriebenen Verlegemaschine 10 ein unmittelbares Wiederherstellen der zuvor gegebenen Straßen- und Wegeverhältnisse und deren Nutzungsoberflächen erlaubt.

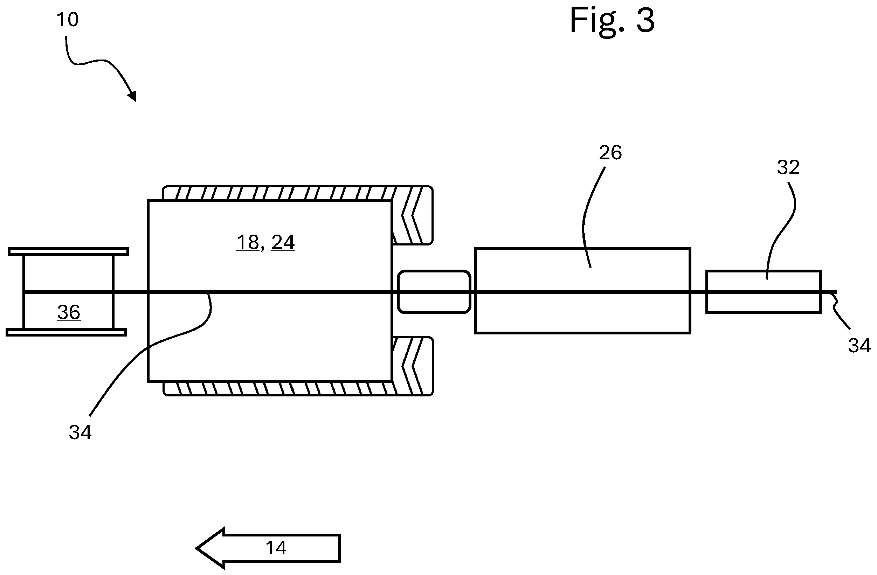

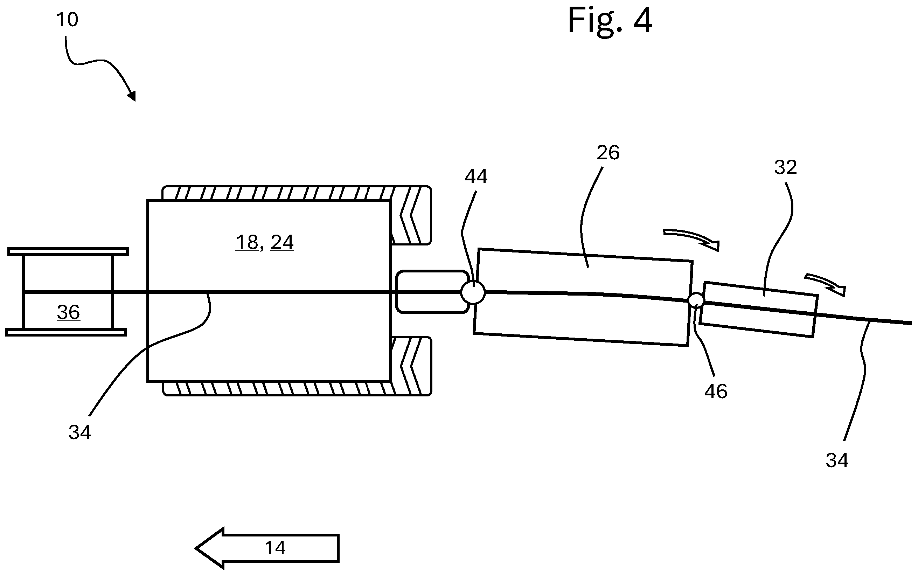

Die schematischen Draufsichten der Figuren 3 und 4 verdeutlichen zudem eine weitere Verfahrensvariante zum Betrieb der in den Figuren 1 und 2 in schematischen Seitenansichten gezeigten Verlegemaschine 10, die eine optionale Kurvenfahrt beim Verlegen der Leitungen 34 dadurch erlaubt, dass die Bodenfräse 26 um eine Hochachse 44 in seitliche Richtung verschwenkt werden kann. Diese zwischen Aufbau 24 des Trägerfahrzeuges 18 und Bodenfräse 26 an geeigneter Stelle befindliche Hochachse 44, die als ungefähr vertikal verlaufende Schwenkachse fungiert, ist beispielhaft in Fig. 2 zeichnerisch verdeutlicht, ebenso wie in Fig. 4. Die Schwenkachse oder Hochachse 44 kann sich an geeigneter Stelle der Verlegemaschine 10 befinden, wo immer dies konstruktiv als sinnvoll erscheint.

Die Fig. 4 verdeutlich einen Anwendungsfall, bei dem die Verlegemaschine 10 während ihrer Fahrt in Vorschubrichtung 14 eine leichte Linkskurve beschreibt, was eine entsprechende Schwenkbewegung der Bodenfräse 26 mitsamt dem rückwärtig daran angeordneten Verlegepflug 32 bedingt. Wahlweise kann darüber hinaus auch der Verlegepflug 32 um eine separate vertikale Achse 46 gegenüber der Bodenfräse 26 verschwenkbar angeordnet sein, um solchermaßen die Kurvenfahrt zu erleichtern. Beide Verschwenkmöglichkeiten sind allerdings als optional zu betrachten und nicht zwingend erforderlich. Sofern weder eine Verschwenkung der Bodenfräse 26 gegenüber dem Aufbau 24 des Trägerfahrzeuges 18 um die Hochachse 44 vorgesehen sein soll, noch eine zusätzliche Verschwenkung des Verlegepfluges 32 um die separate vertikale Achse 46 gegenüber der Bodenfräse 26, so ist eine Kurvenfahrt der Verlegemaschine 10 zwar erschwert, doch nicht unmöglich. Unter Umständen kann es erforderlich sein, in engeren Kurven das Fräsrad 16 anzuheben und statt eines Fräsvorganges im Kurvenabschnitt die Furche mittels eines Baggers auszugraben. Es kann darüber hinaus erforderlich sein, in solchen kürzeren Abschnitten das Kabel oder die Leitung 34 manuell in die zuvor gewählte Ablagetiefe 42 zu bringen, etwa durch vorheriges Freilegen der erforderlichen Ablagetiefe durch manuelles oder baggerunterstütztes Aufgraben der Trasse oder Furche.

Die schematische Draufsicht der Fig. 3 zeigt dagegen das Verlegeverfahren bei geradlinig fahrender Verlegemaschine 10. Für die in Fig. 4 schematisch angedeutete Kurvenfahrt kann es jedoch bereits genügen, wenn lediglich die Schwenkmöglichkeit des Bodenfräse 26 mitsamt dem daran nicht verschwenkbar, sondern nur heb- und senkbar verankerten Verlegepflug 32 um die Hochachse 44 vorgesehen ist. Die zusätzliche Verschwenkmöglichkeit um die separate vertikale Achse 46 soll lediglich als eine Möglichkeit verstanden werden, welche die Kurvenfahrt zusätzlich erleichtert.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Verlegemaschine
12 Bodenoberfläche
14 Verlegerichtung, Vorschubrichtung
16 Fräsrad, rotierendes Fräsrad
18 Trägerfahrzeug
20 Gurtbandlaufwerk
22 Antriebsaggregat
24 Aufbau, Fahrzeugaufbau
26 Bodenfräse
28 Parallelogrammaufhängung
30 Boden, Bodenschicht, Erdreich
32 Verlegepflug
34 Leitung, Kabel
36 Vorratstrommel, Leitungstrommel, Kabeltrommel
38 Linearführung
40 Arbeitstiefe, Furchentiefe
42 Ablageniveau
44 Hochachse
46 separate vertikale Achse

## Patentansprüche

1. Verfahren zum Verlegen von Kabeln und/oder Leitungen (34) im Erdreich (30), bei dem:
- mittels eines an einem fahrenden Trägerfahrzeug (18) höhenverstellbar aufgehängten rotierenden Fräsrades (16) eine Bodenoberfläche (12) aufgebrochen und eine Furche definierter und variabler Tiefe gezogen wird,
- mittels eines dem Fräsrad (16) nachgeordneten und in einer durch die Furche definierten Spur gezogenen Verlegepflugs (32) mindestens ein Kabel und/oder mindestens eine Leitung (34) in das aufgebrochene Erdreich (30) eingebracht wird,
- wobei der Verlegepflug (32) in seinem Arbeits- und Ablageniveau (42) in Bezug zu einer durch das rotierende Fräsrad (16) definierten Furchentiefe variabel einstellbar ist, wobei das Arbeits- und Ablageniveau (42) des Verlegepfluges (32) insbesondere unterhalb der durch das Fräsrad (16) geschaffenen Furchentiefe (40) liegt;
wobei das Verfahren weiterhin vorsieht,
- dass das Fräsrad (16) für eine Kurvenfahrt mitsamt dem dahinter laufenden Verlegepflug (32) um eine vertikale Achse (44) verschwenkt werden kann, und
- dass der Verlegepflug (32) um eine vertikale Achse (46) gegenüber der Aufhängung des Fräsrades (16) verschwenkt werden kann.

2. Verfahren nach Anspruch 1, bei dem mittels des rotierenden Fräsrades (16) eine versiegelte Deckschicht an der Bodenoberfläche (12) aufgebrochen wird.

3. Verfahren nach Anspruch 2, bei dem der Verlegepflug (32) durch ein Bodenniveau gezogen wird, das sich unterhalb der versiegelten Deckschicht der Bodenoberfläche (12) befindet.

4. Verfahren nach einem der Ansprüche 1 bis 3, bei dem der Verlegepflug (32) an einer heckseitig am Trägerfahrzeug (18) befindlichen und in der Höhe verstellbaren Aufhängung angelenkt ist.

5. Fahrbare und ortsverändliche Verlegemaschine (10) zum Verlegen von Kabeln und/oder Leitungen (34) im Erdreich (30), die zumindest umfasst:
- ein angetriebenes Trägerfahrzeug (18) mit
- daran heckseitig höhenverstellbar aufgehängtem rotierendem Fräsrad (16) zum Aufbrechen einer Bodenoberfläche (12) und zum Ziehen einer Furche definierter und variabler Tiefe, und mit
- einem dem Fräsrad (16) nachgeordneten und in einer durch die Furche definierten Spur gezogenen Verlegepflug (32), der dafür vorgesehen und entsprechend ausgestattet ist, um mindestens ein Kabel und/oder mindestens eine Leitung (34) in das aufgebrochene Erdreich (30) einzubringen,
- wobei der Verlegepflug (32) in seinem Arbeits- und Ablageniveau (42) in Bezug zu einer durch das rotierende Fräsrad (16) definierten Furchentiefe variabel einstellbar ist, und
- wobei das Arbeits- und Ablageniveau (42) des Verlegepfluges (32) insbesondere unterhalb der durch das Fräsrad (16) geschaffenen Furchentiefe liegt,
und wobei bei der Verlegemaschine (10) weiterhin vorgesehen ist,
- dass das Fräsrad (16) für eine Kurvenfahrt mitsamt dem dahinter laufenden Verlegepflug (32) um eine vertikale Achse (44) verschwenkbar angeordnet ist und
- dass der Verlegepflug (32) um eine vertikale Achse (46) gegenüber der Aufhängung des Fräsrades (16) verschwenkbar angeordnet ist.

6. Verlegemaschine (10) nach Anspruch 5, bei welcher das rotierend angetriebene Fräsrad (16) heckseitig am Trägerfahrzeug (18) in der Höhe verstellbar aufgehängt ist.

7. Verlegemaschine (10) nach Anspruch 5 oder 6, bei welcher der Verlegepflug (32) mittels einer heckseitig am Trägerfahrzeug (18) befindlichen und in der Höhe verstellbaren Aufhängung angelenkt ist.

8. Verlegemaschine (10) nach einem der Ansprüche 5 bis 7, bei welcher das Trägerfahrzeug (18) durch ein kompaktes Raupenfahrzeug gebildet ist, insbesondere durch ein ferngesteuertes Raupenfahrzeug mit verbrennungsmotorischem, mit elektromotorischem oder sonstigem Antrieb.

9. Verlegemaschine (10) nach einem der Ansprüche 5 bis 8, bei welcher das Trägerfahrzeug (18) eine Vorratstrommel (36) trägt, von der die dem Verlegepflug (32) zugeführte Leitung (34) bzw. das Kabel abgezogen werden kann.

10. Verlegemaschine (10) nach einem der Ansprüche 5 bis 9, die zur Durchführung eines Verfahrens zum Verlegen von Kabeln und/oder Leitungen im Erdreich gemäß einem der Ansprüche 1 bis 4 vorgesehen und entsprechend ausgestattet ist.
